# EUROPEAN PATENT APPLICATION

(11) **EP 1 813 453 A1**
(43) Date of publication of application: **01.08.2007**
(21) Application number: 05779071.9
(22) Date of filing: 19.07.2005
(51) Int. Cl.: B60H 1/03, H05B 3/48, H05B 3/18, H05B 3/82

(54) **AIR-CONDITIONING DEVICE FOR VEHICLES AND SIMILAR**

(30) Priority: 20.07.2004 ES 200401760 U
(71) Applicant: Termoelectrica Vila, S.A., 39300 Torrelavega (ES)
(72) Inventor: VILA GONZÁLEZ, Manuel, E-39010 Santander (ES)
(74) Representative: Evens, Paul Jonathan
(86) International application number: PCT/ES2005/000405
(87) International publication number: WO 2006/018468

(57) **Abstract**

The invention relates to an air-conditioning device for vehicles and similar. The inventive device comprises a module (1) which is equipped with tubes (2) through which the engine coolant flows. In addition to the aforementioned module (1), the device also comprises complementary means (5) formed by electrical resistors made from nickel and iron which perform an automatic adjustment in the event of an excessive temperature increase.

## Description

### Field of the Art

The present invention is related to air-conditioning systems for vehicles, particularly automobiles, proposing a device intended as an additional heating means for supporting the conventional heating system, with automatic adjustment features providing total safety conditions.

### State of the Art

The air in the interior of automobiles is traditionally heated by using the heat itself of the vehicle engine, such that the engine coolant is made to flow through an assembly of tubes with flanges which are arranged in a module, driving a forced air current through said module such that the driven air is heated in the contact with the flanges of the tubes and carries the heat to the interior to be heated.

The drawback of this system is that insofar as the vehicle engine is not heated to the operating temperature (about 80°C), the precise conditions for the heating to carry out its effect do not occur; which means that in the initial starting, a time period has to elapse before the heating effect starts. Due to the fact that vehicle engines are increasingly sophisticated, their heating-up being less, the problem of the heating system is even greater.

In order to lessen this drawback, solutions based on the incorporation of an electrical heating element in the heating air projection circuit are known, such that the driven air for the heating is heated upon passing through said element, although the module of tubes of the heating system, through which the fluid of the cooling circuit of the vehicle flows, is still not hot, therefore the heating effect is effective from the first moment, even when the vehicle engine has still not heated up.

In this sense, heating elements are used formed by a frame crossed by exposed resistive wires which due to safety, must be well secured in the frame, to prevent their contact with other elements. The drawback of this embodiment is that if the air impulse of the heating system fails, the resistive wires acquire a very high temperature, damaging the plastic elements which are close to the installation and giving rise to a high fire risk. To prevent this, safety thermal fuse elements can be placed but the drawback of said elements is that they are irreversible and when they act it is necessary to take the vehicle to the repair shop in order to repair them.

Another known solution consists of using (PTC) ceramic resistors as a complementary electrical heating means in the heating system, which resistors have the advantage of being automatically adjustable, because when their temperature increases, their resistivity (R) increases proportionally, therefore, the power (W) decreases according to the formula W=V²/R, because the voltage (V) is constant, such that the temperature of these resistors cannot reach dangerous values due to the behavior thereof. The drawback of this solution is that (PTC) ceramic resistors are expensive and can cause undesirable peaks in their initial behavior

Furthermore, both this (PTC) ceramic solution and the previous solution require an additional frame, which involves an occupation of space in the installation which is problematic in the current designs of vehicles in which there is increasingly less space.

Electrical resistors with resistive wires which are structured in the form of armored resistors can also be used, which have the advantage of not occupying an additional space because they can be arranged inside the tubes through which the water of the cooling circuit of the vehicle flows, but said resistors require a safety thermal fuse such that if the temperature of the resistor increases too much due to abnormal circumstances, the thermal fuse acts and cuts off the electrical conduction, interrupting the operation of the resistor before it can damage other adjacent elements or reach a risk temperature. This solution has the drawback of irreversibility, because when the thermal fuse melts it is necessary to change the corresponding resistor, which requires a repair shop operation and the subsequent immobilization of the vehicle.

### Object of the Invention

According to the present invention, a device for the mentioned air-conditioning systems is proposed, which device achieves a solution which is particularly advantageous in the constructive and functional aspects.

According to the invention, complementary heating systems formed by electrical resistors are also used in the air-conditioning system, but now such resistors are formed by a resistive wire made from nickel and iron, particularly in a proportion of 70% nickel and 30% iron, the resistivity of which increases according to the temperature, with a subsequent decrease of the power when the temperature of the resistor increases.

The resistive wire is included insulated inside a tubular casing, in the form of an armored resistor, with connecting terminals projecting from the ends.

A heating means is thus obtained formed by an electrical resistor with an automatically adjustable behavior such as (PTC) ceramic resistors, i.e. with a decrease in power when the temperature increases, which prevents the temperature from reaching dangerous values. With the resistors used according to the invention, a reduction of the power according to the temperature of up to 70%, and therefore a great automatic adjustment effect is obtained.

The resistive wire composition based on nickel and iron of the mentioned resistors which are used according to the invention makes these resistors not only more cost-effective than (PTC) ceramic resistors but even more cost-effective than normal resistors, the resistive wire of which has nickel-chromium composition, for example in proportions of 80% nickel and 20% chromium, whereby the automatic adjustment effect is furthermore not obtained.

On the other hand, the constructive arrangement of the resistors used according to the invention, in the form of armored resistors, makes it possible to incorporate them in the module itself of the heating tubes of the heating system of automobiles, placing them inside the tubes of the conventional heating module itself, which completely eliminates the problems of space in the installation.

A mixture of silicon oxide and magnesium oxide is further used as an internal insulator between the resistive wire and the casing of the resistors, which mixture has the particularity of being a good electrical insulator at low temperatures, but as the temperature increases it becomes more conductive, which allows, in combination with a sensor of the resistance of the insulation between the resistive wire and the casing, determining the cutoff of the power supply when the temperature reaches a certain level, said level depending on the proportions of silicon oxide and magnesium oxide in the insulating mixture. In this way, am effective safety is obtained against possible excessive temperatures, without the drawbacks of conventional thermal fuses.

Due to the foregoing, very advantageous features are certainly obtained with the proposed device, giving rise to a preferred embodiment with its own identity with respect to the known embodiments with the same function.

### Description of the Drawings

Figure 1 shows a scheme of the conventional heating arrangement for an automobile.
Figure 2 shows a scheme of the heating arrangement with a supporting additional complementary heating means, also within the solutions included in the state of the art.
Figure 3 shows a longitudinal sectional view of an automatically adjustable armored resistor for the additional heating, according to the invention.
Figure 4 shows a graph of the variation of the resistivity of the automatically adjustable resistor object of the invention, according to the temperature of the resistive wire.
Figure 5 shows a graph of the variation of the power of the automatically adjustable resistor object of the invention, according to the temperature.
Figure 6 shows a graph of the evolution of the power of the automatically adjustable resistor object of the invention, in relation to the resistivity coefficient of the wire, until the stabilization point in natural convection.
Figure 7 shows a scheme of the heating arrangement with armored resistors inside some of the tubes of the heating module through which the engine coolant flows.

### Detailed Description of the Invention

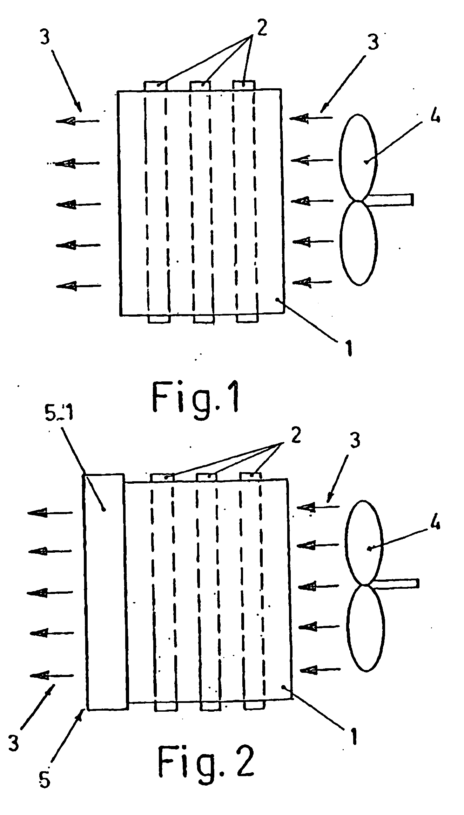

The object of the invention relates to a device for the air-conditioning system of automotive vehicles, as a complement of conventional systems formed, as shown in Figure 1, by a module (1), in which there is arranged a series of tubes (2) through which the engine coolant of the vehicle flows; such that the heat which is dissipated through the mentioned tubes (2) provided to that end with exchanging flanges, is carried towards the interior of the vehicle by means of an air current (3) driven by a means (4) such as a fan.

This system, shown in Figure 1, does not fulfill its heating function while the vehicle engine is not hot, because when the engine is cold, the coolant does not heat the tubes (2) and the latter do not dissipate heat to the air current (3).

To overcome this drawback, the use of electrical-type complementary heating means (5) is known, which means are arranged in the path of the driven air current (3), as shown in Figure 2.

In this way, the complementary heating means (5) heat the air (3) when the tubes (2) do not dissipate the necessary heat for the heating. The means (5) which are used in this sense according to the known embodiments, are wire resistors arranged in a frame, or (PTC) ceramic resistors which are expensive; these solutions occupying a lot of space in the installation because it is necessary to shape a frame (5.1) which is assembled next to the block of tubes (2), the wire resistors or (PTC) ceramic resistors being arranged in this frame (5.1).

Apart from this occupation of space which is very important in the current design of automobiles, the assembly of resistive wires in the frame (5.1) involves a high risk of overheating in the event of the standstill or failure of the power fan (4), which can be overcome arranging safety thermal fuses, but this has the drawback that when said thermal fuses act, it is necessary to take the vehicle to the repair shop to repair them, with the need in many cases of substituting the assembly assembled in the frame (5.1).

In the event of using (PTC) ceramic resistors, these are automatically controlled preventing the risk of excessive temperatures, but the drawback of an occupation of space remains due to the fact that a complementary frame (5.1) is still necessary and furthermore, such resistors are expensive.

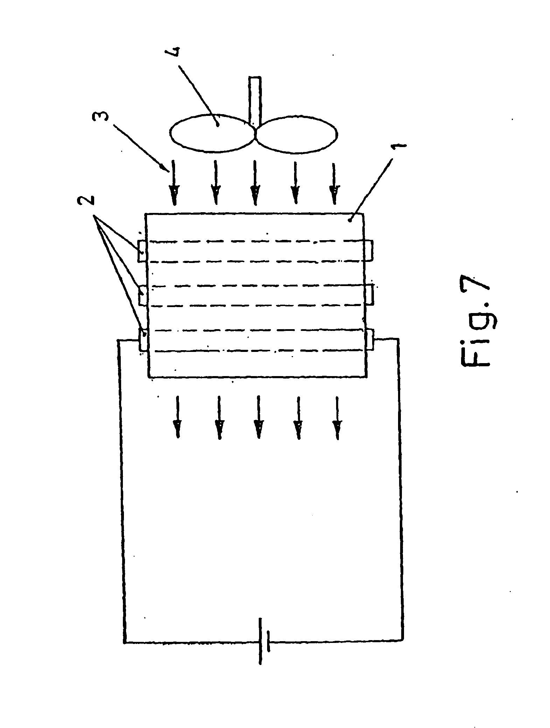

There is a solution, like that of Figure 7, which uses armored-type electrical resistors, which can be arranged inside the tubes (2) of the module (1); such that the need for a complementary frame (5.1) and its subsequent occupation of space is prevented. This solution based on traditional armored resistors also requires the incorporation of a safety thermal fuse element which is normally arranged inside the resistor and which in the event of acting, melts and requires taking the vehicle to the repair shop for the substitution of the resistor-thermal fuse assembly.

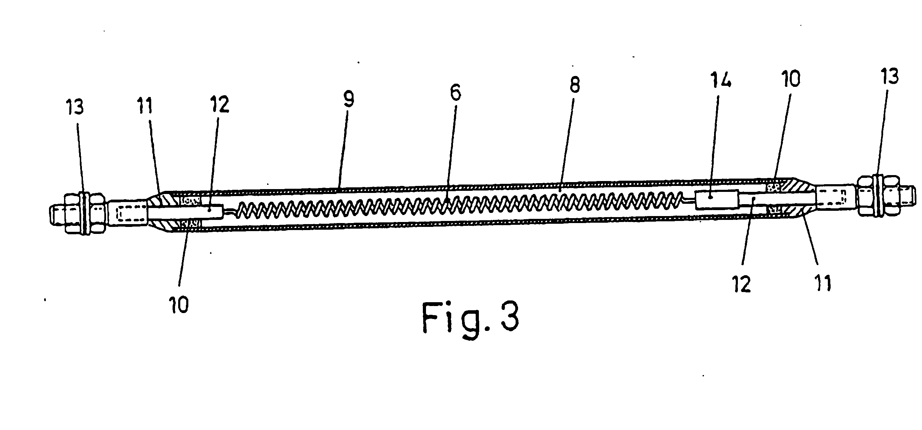

According to the invention, a device formed by resistors (see figure 3) is formed, which resistors have the particularity of being formed by a resistive wire (6) made from nickel-iron in a proportion of 70% nickel and 30% iron.

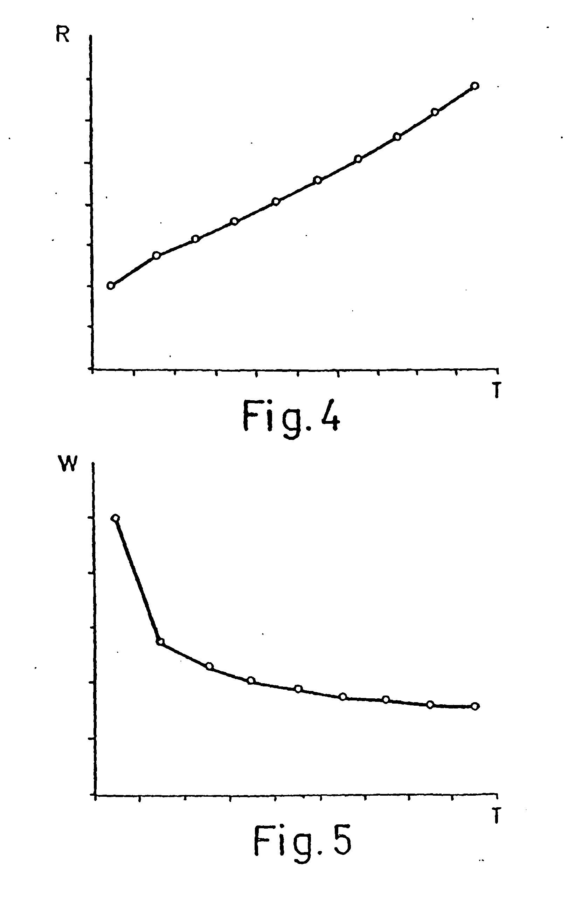

Said resistive wire (6) has a resistivity coefficient varying according to the temperature, due to the Joule effect, when an electrical current flows through it, such that the electrical resistance (R) of the mentioned wire (6) varies proportionally according to the temperature (T) thereof, as shown in the graph of Figure 4.

In accordance with the formula W=V²/R, when the electrical resistance (R) of the wire (6) increases, the electrical power (W) decreases, if the voltage (V) remains constant, as occurs in the electrical installation of vehicles, where the voltage (V) is that provided by the battery. Therefore, the electrical power (W) of the resistive wire (6) decreases according to the increase of the temperature (T) in said wire (6), as shown in the graph of Figure 5.

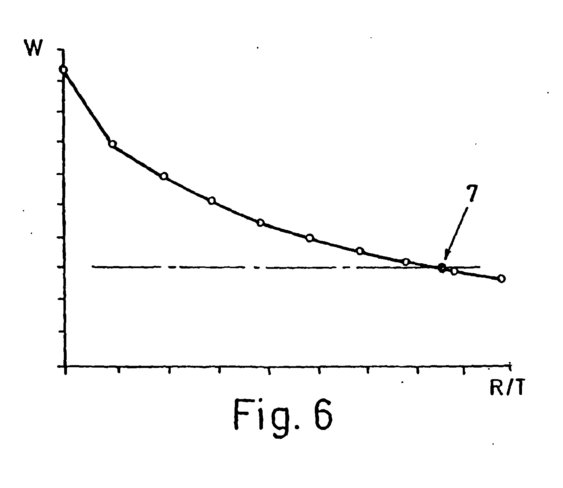

The graph of Figure 6 shows the evolution of the electrical power (W) of the resistive wire (6), in relation to the resistivity coefficient, it being observed that the power (W) decreases as the resistivity coefficient increases up to a stabilization point (7) in natural convection.

With these features, when an electrical voltage (V), such as the 12-volt direct current constant voltage provided by the electrical energy generating system of automobiles, is applied in the resistive wire (6), the temperature (T) of said resistive wire (6) increases and causes an increase of the resistivity coefficient such that, given that the applied voltage (V) does not vary, the electrical power (W) decreases, or in other words, the specific charge (W/cm²) decreases in the surface of the wire (6), said decrease reaching up to 70%. The operation is the same as with any other type of electrical voltage which can be applied, as 24V DC, 40V DC and others, even with alternating current, without any variation in the application.

The effect of this phenomenon is that the temperature (T) of the resistive wire (6) does not rise up to excessively high values, because this temperature (T) depends mainly on the specific charge in the same cooling conditions.

Therefore, if the cooling or forced ventilation (4) of the application system is accidentally interrupted, the resistive wire (6) itself carries out an automatic adjustment, the power decreasing when the temperature tends to increase, which prevents the temperature form rising to dangerous values exceeding the maximum temperature value that the plastic material surrounding the module (1) can resist.

As shown in Figure 3, the resistive wire (6) is included surrounded by an electrical insulator (8) inside a tubular casing (9) in the form of an armored resistor, which casing is closed at the ends with tightness seals (10) and ceramic or plastic bushings (11), through which respective rods (12) pass, which rods are connected to the resistive wire (6) and end externally in terminals (13) for the application connections.

The resistors thus formed can be included in the same module (1) of the application heating system as the tubes (2) for the heating by means of the engine coolant, and can even be included inside the mentioned tubes (2), as in Figure 7, whereby the necessary space for the assembly of the installation in the practical application is the same as in conventional heating systems, there being available however an electrical heating aid for when the cooling system of the engine of the vehicles has not yet reached the necessary temperature, for the effectiveness of the heating system, the aiding electrical means itself carrying out an automatic adjustment preventing the temperature from reaching dangerous values.

For a greater safety against the possible increase of the temperature to dangerous values due to possible reasons, the resistive wire (6) can be arranged in the armored resistors associated to a thermal fuse (14) for the cutoff in the event of over temperature if the automatic adjustment were not enough.

In this manner, the creation of a system with automatic adjustment is achieved with the solution now proposed, as occurred with (PTC) ceramic resistors but with the advantage with respect to the latter that it does not occupy an additional space and the solution is much more cost-effective, this type of resistive wire being even more cost-effective than that used traditionally in armored resistors.

For the purpose of preventing the drawback involved in the incorporation of the safety thermal fuse (14), due to the need for substituting the affected resistor when said thermal fuse acts, an embodiment is provide in which a mixture of silicon oxide and magnesium oxide is used as an insulator (8) between the resistive wire (6) and the outer casing (9), which mixture has a good electrical insulating behavior at low temperature, but as the temperature increase, said mixture becomes more conductive.

In this manner, by means of the incorporation of any device detecting the resistance of the insulation between the resistive wire (6) and the casing (9), such as a differential relay, the cutoff of the power supply can be determined when the temperature of the resistors reaches a certain value, preventing an excessive temperature from being reached.

According to the proportions of silicon oxide and magnesium oxide, the conductivity of the mixture varies according to the temperature, such that the safety electrical cutoff can be established at the desired temperature according to the mixture used as insulator (8). Said mixture of silicon oxide and magnesium oxide is further very antihygroscopic, which is also very advantageous for the application resistors.

## Claims

1. An air-conditioning device for vehicles and similar, of the type in which the heat for the heating is obtained by using the dissipation of the heat of the coolant of the vehicle engine, making this coolant flow through tubes (2) included in a heating module (1), **characterized in that** as a complement of the heating module (1), there are arranged electrical resistors formed by a resistive wire (6) made from a composition of nickel and iron, the resistivity of which increases according to the temperature, providing an automatic adjustment preventing the excessive temperature increase in said electrical resistors.

2. An air-conditioning device for vehicles and similar according to claim 1, **characterized in that** the resistive wire (6) of the electrical resistors is included surrounded by an electrical insulator (8) inside a tubular casing (9), in the form of an armored resistor, a mixture of silicon oxide and magnesium oxide being used as an electrical insulator (8), the insulation resistance of which varies according to the temperature, so as to determine the cutoff of the power supply at a certain temperature level, by means of a detector of the resistance of the insulation between the resistive wire (6) and the casing (9).

3. An air-conditioning device for vehicles and similar, according to claim 1, **characterized in that** the resistive wire (6) is formed by 70% nickel and 30% iron.

4. An air-conditioning device for vehicles and similar, according to claims 1 and 2, **characterized in that** the armored resistors formed by a resistive wire (6) made from nickel and iron and with an insulator (8) of silicon oxide and magnesium oxide are incorporated in the module (1) of the heating system, inside the tubes (2) of said module (1).

5. An air-conditioning device for vehicles and similar according to claim 1, **characterized in that** a safety thermal fuse (14) can be incorporated in combination with the resistive wire (6).
